# EUROPÄISCHE PATENTSCHRIFT

(11) **EP 1 790 025 B1**
(45) Veröffentlichungstag und Bekanntmachung des Hinweises auf die Patenterteilung: **11.11.2009**
(21) Anmeldenummer: 04762749.2
(22) Anmeldetag: 30.08.2004
(51) Int. Cl.: H01M 8/02, H01M 8/12, H01M 8/24

(54) **STAPELBARE HOCHTEMPERATURBRENNSTOFFZELLE**
STACKABLE HIGH TEMPERATURE FUEL CELL
PILE A COMBUSTIBLE HAUTE TEMPERATURE EMPILABLE

(43) Veröffentlichungstag der Anmeldung: 30.05.2007
(73) Patentinhaber: Fraunhofer-Gesellschaft zur Förderung der angewandten Forschung e.V., 80686 München (DE)
(72) Erfinder: OTSCHIK, Peter, 01728 Possendorf (DE); MEGEL, Stefan, 01277 Dresden (DE); EICHLER, Klaus, 01187 Leipzig (DE)
(74) Vertreter: Pfenning, Meinig & Partner GbR
(86) Internationale Anmeldenummer: PCT/DE2004/001963
(87) Internationale Veröffentlichungsnummer: WO 2006/024246

(56) Entgegenhaltungen:
- EP-A- 0 410 159
- EP-A- 0 446 680
- EP-A- 0 556 532
- WO-A-2004/071150
- DE-A1- 4 016 157
- DE-A1- 4 237 602
- DE-A1- 19 718 849
- DE-A1- 19 749 004
- DE-A1- 19 835 253
- DE-A1- 19 941 282
- DE-C1- 4 340 153
- DE-C1- 19 609 133
- DE-C1- 19 627 504
- DE-C1- 19 710 345
- US-A- 5 064 734
- US-B1- 6 492 053
- SELCUK A ET AL: "Elastic Properties of Ceramic Oxides Used in Solid Oxide Fuel Cells (SOFC)" JOURNAL OF THE EUROPEAN CERAMIC SOCIETY, ELSEVIER SCIENCE PUBLISHERS, BARKING, ESSEX, GB, Bd. 17, Nr. 12, 1997, Seiten 1523-1532, XP004097502 ISSN: 0955-2219

## Beschreibung

Die Erfindung betrifft stapelbare Hochtemperaturbrennstoffzellen, die zu sogenannten Brennstoffzellenstapeln (Stacks) kombiniert und solche einzelnen Hochtemperaturbrennstoffzellen in Reihe und/oder parallel elektrisch und mechanisch miteinander verschaltet werden können, um insbesondere höhere elektrische Ausgangsleistungen zu erhalten.

Neben den zwingend erforderlichen Elementen einer einzelnen Brennstoffzelle und hier insbesondere der Elektroden-Membran-Einheit verfügen Brennstoffzellen häufig über mindestens einen so genannten Interkonnektor. Die Interkonnektoren grenzen die Gasräume über der Anode bzw. Kathode ab und stellen die elektrische Verbindung zwischen der Kathode der einen Brennstoffzelle und der Anode einer weiteren Brennstoffzelle dar.

So können an einer erfindungsgemäßen stapelbaren Hochtemperaturbrennstoffzelle auch zwei gegenüberliegend angeordnete Interkonnektoren vorhanden sein.

Der Interkonnektor ist so geformt, dass auf der Anodenseite Gasräume für die Brennstoffversorgung und auf der Kathodenseite Gasräume für die Oxidationsmittelversorgung vorhanden sind.

Für die eigentliche Funktion der Interkonnektoren ist es aber erforderlich, dass eine elektrisch leitende Verbindung zwischen Anode (bzw. Kathode) der einen Zelle mit der Kathode (bzw. Anode) weiterer Zellen hergestellt werden kann.

Hier bereiten insbesondere die chemischen und thermischen Verhältnisse der oxidierenden Atmosphäre im Bereich der Kathode Probleme.

So wurden in der Vergangenheit Vorschläge unterbreitet, wie eine elektrisch leitende Verbindung in diesem Bereich hergestellt werden kann.

So wurde beispielsweise vorgeschlagen, Netzwerke oder Geflechte aus Metallen in diesem Bereich anzuordnen, die eine elektrisch leitende Überbrückung zwischen Kathode und entsprechendem Interkonnektor gewährleisten sollen. So ist beispielsweise in DE 100 27 311 A1 die Verwendung von Silber und in DE 196 49 457 die Verwendung von Nickel in dieser Form vorgeschlagen worden.

Bei diesen Metallen besteht aber das Problem, dass bei Silber ein Abdampfen vorkommen kann, wobei das Silber sich in der Kathode ablagert und dadurch die Effizienz der jeweiligen Brennstoffzelle stark beeinträchtigt wird.

Andere Metalle, wie auch Nickel neigen zu Oxidation, was selbstverständlich ebenfalls zur Reduzierung der elektrischen Leitfähigkeit in unerwünschter Form führt.

Aus DE 100 33 898 A1 ist es bekannt, zwischen einer Kathode und einem Interkonnektor eine metallische Lochfolie anzuordnen, bei der im Wesentlichen eine Eisen-Basis-Legierung eingesetzt werden soll. Eine solche Lochfolie soll in mehreren Wellen gewölbt sein, so dass Wellenberge bzw. Wellentäler entweder mit der Kathode oder mit dem jeweiligen Interkonnektor in Kontakt treten und so die elektrisch leitende Verbindung hergestellt werden kann.

Auch hier bereiten die hohen Temperaturen in Verbindung mit dem für die Funktion der Brennstoffzelle erforderlichen Sauerstoff Probleme, die zu einer Oxidation oder einem Ausdampfen von Legierungselementen führen, die die elektrischen sowie die mechanischen Eigenschaften und hier insbesondere die Festigkeit und Kriechbeständigkeit herabsetzen.

Um diesen Effekten entgegen zu wirken, wurde in DE 100 33 898 A1 auch vorgeschlagen, die Oberflächen einer solchen Folie mit einer Nickel-AluminiumLegierung bzw. mit einem Nickelaluminid zu überziehen, um die thermische und chemische Beständigkeit unter den in diesem Bereich herrschenden Bedingungen zu erhöhen.

Es liegt auf der Hand, dass eine solche Schutzschicht einen erheblichen zusätzlichen Herstellungsaufwand hervorruft. Des Weiteren sind solche Nickellegierungen und insbesondere Nickelaluminid im Nachgang nur schwer verformbar, so dass sich auch hier entsprechende Probleme ergeben.

So wird es in der Regel erforderlich sein, erst die entsprechende Wellenform einer solchen Metallfolie auszubilden und nachfolgend die jeweilige Legierung oder das Intermetall auf der entsprechenden Oberfläche aufzubringen.

Aus dem Stand der Technik (US 6,492,053 B1) sind darüberhinaus stapelbare Hochtemperaturbrennstoffzellen mit Elektrodeneinheiten und Interkonnektoren bekannt, bei denen zwischen Anode und Interkonnektor und/oder zwischen Kathode und Interkonnektor ein federelastisches Element zur Sicherung des elektrischen Kontakts angeordnet sein kann. Letzteres kann aus einem keramischen Material bestehen und eine Porosität aufweisen.

Der Stand der Technik kennt desweiteren (DE 42 37 602 A1) Funktionsschichten aus Fasern als leitende Verbindungselemente, welche leicht verformbar sind und auch als Grünfolie mit ungesintertem Kontaktmaterial als Funktionsschicht oder als keramisches Vlies ausgebildet sein können.

Schließlich offenbart der Stand der Technik (EP 0 410 159 A) federelastische Kontaktelemente aus elektrisch leitendem Keramikwerkstoff, wobei verschiedene Ausführungen möglich sind, in Form von Drähten, Bändern oder Geflechten, welche als Dreiecke, Rechtecke, Trapeze, schiefe Wellen oder auch als Schraubwendeln ausgebildet sind.

Außerdem ist aus DE 40 16 157 A1 eine Vorrichtung zur Umwandlung von chemischer Energie in Elektroenergie mittels in Serie geschalteter HochtemperaturBrennstoffzellen bekannt. Dabei ist ein Festelektrolyt mit dazwischen geschalteten Bauelementen in Form von elektrisch leitenden gasdichten ebenen Trennplatten und beidseitig angeordneten elektrisch leitenden vollelastischen einen Druck senkrecht zur Plattenebene ausübenden Stromkollektoren vorhanden.

Es ist daher Aufgabe der Erfindung eine Möglichkeit vorzuschlagen, mit der eine elektrisch leitende Verbindung zwischen einer Kathode und einem Interkonnektor an einer stapelbaren Hochtemperaturbrennstoffzelle auszubilden, die auch bei Temperaturen oberhalb 800 °C sowie der beim Betrieb der Brennstoffzelle herrschenden oxidierenden Atmosphäre eine ausreichend hohe elektrische Leitfähigkeit, sowie eine chemisch und mechanisch ausreichende Festigkeit bzw. Stabilität aufweist.

Erfindungsgemäß wird diese Aufgabe mit einer stapelbaren Hochtemperaturbrennstoffzelle, die die Merkmale des Anspruchs 1 aufweist, gelöst. Vorteilhafte Ausgestaltungsformen und Weiterbildungen der Erfindung können mit den in den untergeordneten bezeichneten Merkmalen erreicht werden.

Die erfindungsgemäße stapelbare Hochtemperaturbrennstoffzelle weist, wie dies auch aus dem Stand der Technik bekannt ist, eine Elektrodeneinheit, die anodenseitig an eine Brennstoffzuführung und kathodenseitig an eine Oxidationsmittelzuführung angeschlossen ist, sowie einen Interkonnektor, der die Gasverteilung über den Elektroden und die elektrische Kontaktierung realisiert, auf. Zwischen der Kathode und diesem Interkonnektor ist ein elektrisch leitendes federelastisches Kontaktelement angeordnet, das eine Form aufweist, mit der gewährleistet ist, dass Bereiche des Kontaktelementes, sowohl die Kathode, wie auch Bereiche des Interkonnektors berühren, wobei durch die Formgebung des Kontaktelementes und die Anordnung von Kathode und Interkonnektor in diesen Bereichen eine Druckkraft ausgeübt wird, so dass trotz der beim Betrieb der Brennstoffzelle auftretenden Abstandsveränderungen zwischen Elektrode und Interkonnektor, die elektrisch leitende Verbindung zwischen Kathode und Interkonnektor auf Dauer gewährleistet werden kann.

Es besteht aber auch die Möglichkeit, erfindungsgemäß mehrere solcher federelastischen, elektrisch leitenden Kontaktelemente, zwischen Kathode und dem Interkonnektor anzuordnen.

Erfindungsgemäß sind die federelastischen Kontaktelemente aus einem elektrisch leitenden Keramikwerkstoff gebildet. Es hat sich überraschenderweise herausgestellt, dass solche Keramiken in entsprechenden geeigneten Formen hergestellt werden können, die in ausreichendem Maß dauerhaft stabil und federelastisch sind.

Als Werkstoff bieten sich gut elektrisch leitende Keramiken aus der Gruppe der Perowskit- oder andere Keramiken an.

So sind beispielsweise geeignete Perowskitkeramiken ein LSMC (z.B. La₀₋₈Sr_{0,2}Mn_{0,9}Co_{0,1}O₃₋ₓ) , ein uLSMC (z.B. La_{0,75}Sr_{0,2}Mn_{0,9}C0_{0,1}O₃₋ₓ), uLCM (z.B. La_{0,75}Ca_{0,2}MnO₃₋ₓ₎, uLSM (z.B.La_{0,75}Sr_{0,2}MnO₃₋ₓ), LSM (z.B. La_{0,8}Sr_{0,2}MnO₃₋ₓ) , LSC (z.B. La_{0,8}Sr_{0,2} CoO₃₋ₓ) oder LSCFe (z.B. La_{0,6}Sro_{0,4}Co_{0,2}Fe_{0,8}O₃₋ₓ).

Als andere geeignete Keramiken sind beispielsweise Materialien mit der Grundzusammensetzungsform: AB₂O₃, A₂BO₄ oder A₂B₂O₇ denkbar, wobei der A-Platz mit Y, Sc, Ce, La, Pr, Nd, Sm, Eu oder Gd gegebenenfalls in Kombination mit Mg, Ca, Sr oder Ba besetzt sein kann.

Eine Besetzung des B-Platzes ist mit Ti, V, Cr, Mn, Fe, Co, Ni, Zn, Zr, Nb, Mo, W, Sn, Sb, Pb oder Bi möglich.

Die Kontaktelemente können aus einer entsprechend geeigneten Keramik in Form von Folien eingesetzt werden, die aus einem Pulver der jeweiligen Keramik bestehen, bei dem 50% der Pulverkörner einen Durchmesser unter 2 bis 5 µm besitzen. Bevorzugt sind ca. 2,5 µm, die auf an sich bekannte Weise hergestellt werden können. Solche Folien können im Gießverfahren mit einer relativ geringen Dicke hergestellt werden, wobei relativ geringe Wandstärkedifferenzen zu verzeichnen sind. Im Grünzustand kann eine Nachbearbeitung solcher Folien erfolgen, um eine Glättung und eine weitere Wandstärkereduzierung vornehmen zu können.

Im Anschluss daran kann dann das Sintern durchgeführt werden.

Es besteht die Möglichkeit, die gewünschte formgebende Gestaltung von Kontaktelementen an der Grünfolie, also vor dem Sintern durchzuführen.

In einer Alternative kann die Formgebung aber auch nach dem Sintern durch eine spanende Bearbeitung (Schleifen) erfolgen.

Außerdem können an Kontaktelementen vor oder auch nach dem Sintern Durchströmungsöffnungen für eine bessere Oxidationsmittelversorgung der Kathode ausgebildet werden.

Die fertigen Kontaktelemente liegen dann als Folie in der gewünschten Form vor und weisen Wandstärken im Bereich zwischen 20 und 150 µm auf, wobei Wandstärken von ca. 50 µm zu bevorzugen sind, um günstige mechanische Eigenschaften und eine ausreichend hohe elektrische Leitfähigkeit zu erreichen.

Ein oder auch mehrere so geformte Kontaktelemente können dann zwischen dem Interkonnektor und der Kathode angeordnet werden. Interkonnektor und Elektroden-Membran-Einheit können dann mittels eines äußeren Randelementes (Fügeglasrahmen) mechanisch miteinander verbunden werden, wobei die Verbindung so gestaltet werden sollte, dass durch den Abstand zwischen Interkonnektor und Kathode sowie der Dimensionierung des einen oder auch mehrerer Kontaktelemente(s) eine Vorspannung des/der Kontaktelemente(s) erreicht wird, die zur gewünschten Druckkraftbeaufschlagung führt.

Ein solches Randelement sollte aus einem elektrisch nicht leitenden Werkstoff gebildet sein, zumindest jedoch eine elektrische Isolierschicht aufweisen.

Aufgrund von Dichtheitsanforderungen muss die Elektroden-Membran-Einheit so geformt sein, dass der Fügeglasrahmen auf dem Festelektrolyten abdichtet. Ein hierfür geeignetes "Fügeglas" ist in EP 0 897 897 A1 beschrieben.

Nachfolgend sollen einige geeignete Formen für Kontaktelemente, mit denen die gewünschte Federelastizität erreichbar wird, erläutert werden.

So können einzelne Kontaktelemente in Wellen-, Keil- oder auch Trapezform ausgebildet werden, wobei ein Kontaktelement als entsprechend geformtes flächiges Gebilde eingesetzt werden kann, und dabei die einzelnen Wellen, Keile oder Trapeze jeweils parallel zueinander ausgerichtet sein können.

Insbesondere bei wellen- oder keilförmigen Kontakt-elementen ergeben sich dann linienförmige Kontaktbereiche, an denen die entsprechenden Druckkräfte wirken.

Es besteht aber auch die Möglichkeit, ein oder mehrere solcher Kontaktelemente ebenfalls als flächige Elemente auszubilden, wobei an einem solchen Kontaktelement dann punktförmige Erhebungen und Vertiefungen ausgebildet sind, die diskret zueinander angeordnet sind, so dass beispielsweise die Erhebungen im berührenden Kontakt zum Interkonnektor und die Vertiefungen dann entsprechend im Kontakt mit der Kathode stehen können.

Im Falle, dass an einer solchen Brennstoffzelle mehrere einzelne Kontaktelemente eingesetzt werden sollen, können diese als offene oder geschlossene röhrenförmige Elemente ausgebildet sein.

So ist unter einem geschlossenen röhrenförmigen Element, ein solches Element zu verstehen, dass eine radial vollständig umlaufende Mantelfläche aufweist, wohingegen die beiden gegenüberliegenden Stirnseiten offen sind.

Als ein offenes röhrenförmiges Element soll ein Element verstanden werden, dessen Mantel einen Querschnitt aufweist, der einem mehr oder weniger großen Teilkreis entspricht. So kann ein solches Element beispielsweise in Form eines entlang seiner Längsachse geschnittenen Rohres ausgebildet sein, das eine Mantelfläche mit dem halben Umfang eines Rohres aufweist.

Solche einzelnen Kontaktelemente, die in Mehrzahl in eine Brennstoffzelle eingesetzt werden können, können aber auch trapez- oder keilförmig ausgebildet sein.

Mehrere dieser einzelnen Kontaktelemente können bevorzugt in eine Brennstoffzelle eingesetzt werden, bei der am Interkonnektor Oxidationsmittelkanäle ausgebildet sind. In diesem Fall können die Kontaktelemente dann so eingesetzt werden, dass sie flächig oder linienförmig auf die Stege, die die einzelnen Oxidationsmittelkanäle voneinander trennen, mit Druckkraftbeaufschlagung aufliegen.

Dabei kann ein Kontaktelement so angeordnet sein, dass seine Konturierung parallel oder quer zu an einem Interkonnektor ausgebildeten Gaskanälen ausgerichtet ist.

Dieser Sachverhalt trifft analog auf die Anordnung von mehreren einzelnen Kontaktelementen bzgl. der Ausrichtung ihrer Längsachsen zur Ausrichtung der Gaskanäle zu.

So können bei einer parallelen Ausrichtung größere Flächen miteinander kontaktiert werden. Bei einer Ausrichtung quer zu den Gaskanälen ist der Justieraufwand reduziert.

Mit der erfindungsgemäßen Lösung ist es aber nicht mehr zwingend erforderlich, einen Interkonnektor mit Oxidationsmittelkanälen einzusetzen, da das Oxidationsmittel durch die gebildeten Freiräume des Kontaktelementes oder auch mehrerer Kontaktelemente geführt werden kann. Dadurch kann die kathodenseitige Oberfläche des Interkonnektors eben ausgebildet werden, wodurch sich die Herstellungskosten deutlich reduzieren lassen.

Für die Aufbringung der Vorspannung von Kontaktelementen ist es vorteilhaft, diese so zu gestalten, zu dimensionieren und innerhalb der Brennstoffzelle so anzuordnen, dass mindestens eine äußere Stirnseite an der nach innen weisenden Fläche des Randelementes anliegt, diese Stirnseite entsprechend abgestützt wird und quasi ein Widerlager gebildet ist.

Insbesondere für die Kompensation einer Wärmeausdehnung beim Betrieb der Brennstoffzelle ist es günstig, ein Kontaktelement so zu gestalten und anzuordnen, dass mindestens eine Stirnseite in einem Abstand zur Kathode und ebenfalls in einem Abstand zum Interkonnektor am Randelement anliegt und sich dort abstützt, so kann eine Kompensationsbewegung dieser Stirnseite in Richtung auf die Kathode oder den Interkonnektor erreicht werden, wenn infolge unterschiedlicher Temperaturen eine Wärmeausdehnungskompensation von Kontaktelementen erforderlich ist.

Bei der Herstellung von Kontaktelementen besteht aber auch die Möglichkeit, eine Porosität einzustellen, mit der gewährleistet wird, dass das/die Kontaktelement(e) für das Oxidationsmittel permeabel ist/sind.

In diesem Fall kann dann auf die Ausbildung von Durchströmungsöffnungen an Kontaktelementen gegebenenfalls verzichtet werden.

Kontaktelemente können aber auch aus miteinander versinterten Fasern einer elektrisch leitenden Keramik, die ein Vlies bilden, eingesetzt werden. Dabei können günstige Voraussetzungen durch eine vorteilhafte Ausbildung solcher Vliese bezüglich der gewünschten elektrischen Leitfähigkeit, Elastizität und Permeabilität/Porosität berücksichtigt werden. An solchen Vliesen können dann unterschiedliche Bereiche ausgebildet werden, die jeweils unterschiedliche Elastizitäten, Porositäten und Dichten aufweisen.

Bei der Herstellung solcher Vliese kann so vorgegangen werden, dass nach dem an sich bekannten ALCERU-Verfahren gearbeitet wird. Hierbei werden Zellulosefasern mit dem jeweiligen elektrisch leitenden Keramikpulver beladen. Hierfür geeignete Keramiken sind bereits erwähnt worden.

Für die Herstellung eines Grünvlieses mit homogener Flächendichte kann so vorgegangen werden, dass die jeweiligen Fasern in einer Lösung gut durchmischt werden. Danach wird das Lösungsmittel durch ein Sieb abgezogen und das Grünvlies getrocknet. Dabei entsteht ein homogenes Grünvlies mit gleichmäßiger Faserverteilung.

Das dann vorliegende Grünvlies kann mit einem geeigneten Formwerkzeug bereichsweise verformt und so bestimmte Bereiche verdichtet werden. Das verformte Grünvlies weist dementsprechend eine Oberflächenstruktur mit Erhebungen und Vertiefungen auf, wobei die Erhebungen in Form von Stegen ausgebildet werden können, also das quasi eine Kanal-Steg-Struktur erhalten werden kann.

In den vorab verdichteten Bereichen liegen die Fasern dichter beieinander und können daher besser miteinander versintern. In den weniger verdichteten Bereichen, also den Erhebungen/Stegen bleibt die erhöhte Elastizität von Fasern erhalten, so dass eine gute Anpressung an Kathode und Interkonnektor mit diesen Erhebungen/Stegen erreicht werden kann und die höher verdichteten Bereiche eine entsprechend höhere elektrische Leitfähigkeit aufweisen.

Da die eingesetzten Fasern für die Vliese eine geringe Dicke aufweisen und nach dem Sintern relativ spröde sind, können sie mit einem organischen Überzug stabilisiert werden.

Sie weisen eine entsprechende Porosität/Permeabilität auf, so dass sie die gewünschte Gasverteilung ermöglichen.

Um die elektrische Leitfähigkeit des Kontaktelementes zu erhöhen, können sie mit einer Dispersion getränkt werden. Diese Dispersion kann Edelmetalle oder Keramiken enthalten und eine bessere Verbindung der Fasern ermöglichen. Beim Einsatz von Keramikpulver sollte feines Pulver (d₅₀ < 1 µm) eingesetzt werden, so dass bereits bei relativ niedrigen Sintertemperaturen eine gute Versinterung erreichbar ist.

So können die stärker verdichteten Bereiche eines in Vliesform ausgebildeten Kontaktelementes Dichten im Bereich zwischen 3 und 6,5 g/cm³ und die nicht oder weniger verdichteten Bereiche, die Erhebungen oder Stege bilden, eine Dichte im Bereich zwischen 1 und 4 g/cm³ aufweisen. Letztgenannte Bereiche erreichen eine Mindestelastizität von 5 %, die bis auf 40 % gesteigert werden kann. Es ist eine Porosität von ca. 70 % gegeben, so dass ein Gasaustausch durch ein solches Vlies ohne weiteres möglich ist.

Die Fasern können Durchmesser im Bereich zwischen 5 und 100 µm aufweisen.

Die elektrisch leitende Kontaktierung von Kontaktelementen mit der Kathode und/oder dem Interkonnektor kann mit Hilfe einer Kontaktschicht, die auf Kathode, Kathodenelement und/oder dem Interkonnektor ausgebracht ist, verbessert werden. Sie kann vor dem Fügen des Brennstoffzellenstapels (Stack) auf die entsprechenden Einzelteile gedruckt werden und/oder während des Fügeprozesses über die Gase als Pulver eingebracht werden, die sich dann an den Kontaktstellen ablagern und bei entsprechend erhöhten Temperaturen die Kontaktschichten aus dem Pulver ausgebildet werden.

So sollten solche Kontaktschichten an Bereichen punkt- oder linienförmiger Berührung von Kontaktelementen an Kathode und/oder Interkonnektor ausgebildet werden. Die Kontaktschichten können in diesem Falle auch im Zwickelbereich von Kontaktelementen mit Kathode und/oder Interkonnektor vorhanden sein. Die Kontaktschichten können ebenfalls aus einer elektrisch leitenden Keramik gebildet sein.

Die Brennstoffzelle, wie sie bisher im Wesentlichen beschrieben worden ist, bei der lediglich die kathodenseitige Kontaktierung über das elastische Kontaktelement realisiert wird, kann auch eine Kontaktierung der Anodenseite mit dem Interkonnektor über ein elastisches Kontaktelement aufweisen.

In diesem Fall können zwischen dem Interkonnektor und der Anode auch Kontaktelemente angeordnet sein, wie sie vorab bereits erläutert worden sind.

Die erfindungsgemäß einzusetzenden Kontaktelemente erfüllen die funktionalen Anforderungen beim Betrieb von Brennstoffzellen über eine deutlich erhöhte Betriebsstundenzahl. Es wird eine über die gesamte Lebensdauer nahezu unveränderte elektrische Leitfähigkeit auch bei Temperaturen oberhalb von 800 °C eingehalten. Die erfindungsgemäß einzusetzenden Kontaktelemente sind sowohl chemisch wie auch mechanisch stabil. Eine Beeinflussung der Elektrodeneinheit erfolgt nicht und die federelastischen Eigenschaften sowie die elektrische Leitfähigkeit bleiben dauerhaft erhalten.

Eine Zyklisierung der Brennstoffzelle ist durch diese Kontaktierung ohne Probleme möglich.

Nachfolgend soll die Erfindung beispielhaft näher erläutert werden.

Dabei zeigen:
- Figur 1: ein Beispiel einer erfindungsgemäßen sta- pelbaren Hochtemperaturbrennstoffzelle in einem Teilschnitt und
- Figur 2: ein Beispiel mit einem Faservlies als Kon- taktelement.

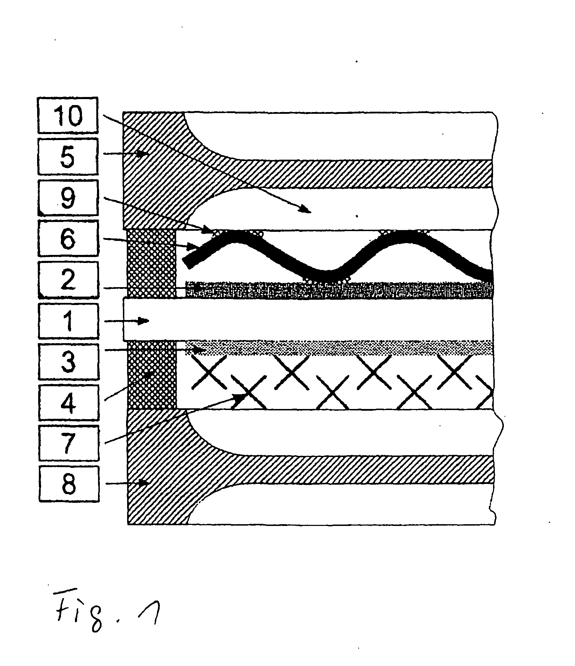

Bei dem in Figur 1 gezeigten Beispiel ist zwischen zwei Interkonnektoren 5 und 8 eine aus Kathode 2, Festelektrolyt 1 und Anode 3 gebildete Elektrodeneinheit angeordnet. Die Abdichtung der Gasräume erfolgt über ein Randelement 4 aus einer Glaskeramik. Dabei erfüllt das Randelement 4 die Verbindungsaufgabe zwischen den vorab bezeichneten Elementen und fixiert den Abstand zwischen Kathode und dem kathodenseitigen Interkonnektor 5. Dadurch wird die Vorspannung auf das elastische Kontaktelement 6 erhalten.

Das Kontaktelement 6 ist bei diesem Beispiel ein flächiges in Wellenform ausgebildetes Element, dessen Wellenberge mit der kathodenseitigen Interkonnektoroberfläche bereichsweise im berührenden Kontakt stehen und dessen Wellentäler bzw. gegenüberliegende Wellenberge im berührenden Kontakt mit der Kathode 2 stehen. Infolge der fixierten Anordnung von Kathode 2 und Interkonnektor 5 sowie der Dimensionierung und Form des Kontaktelementes 6 mit dessen federelastischen Eigenschaften wirken Druckkräfte an den Berührungsbereichen, die in jedem Fall eine ausreichend hohe elektrische Leitfähigkeit zwischen Kathode 2 und Interkonnektor 5 gewährleisten.

Bei diesem Beispiel ist die Oberfläche des Interkonnektors 5 strukturiert worden, so dass Oxidationsmittelkanäle 10 vorhanden sind. Dies ist aber, wie im allgemeinen Teil der Beschreibung bereits angesprochen, nicht zwingend erforderlich, da die Gaskanäle auch durch das/die Kontaktelement(e) 6 gebildet werden können.

Ein Kontaktelement 6, wie es beim Beispiel nach Figur 1 eingesetzt werden kann, kann unter Verwendung eines unter die Gruppe der Perowskit-Keramiken fallenden LSMC Pulvers hergestellt werden. Ein solches Pulver kann die mit ABO₃ bezeichnete Struktur aufweisen. Wobei der A-Platz mit 80% Lanthan und 20% Strontium und der B-Platz mit 90% Mangan und 10% Kobalt (La_{0,8}Sr_{0,2}Mn_{0,9}Co_{0,1}O₃₋ₓ) besetzt ist.

Das eingesetzte Keramikpulver wies eine Volumenverteilung auf, bei der 50% der Pulver-Korndurchmesser unter 2,5 µm lagen.

Unter Einsatz des LSMC-Pulvers wurde auf an sich bekannte Weise eine Grünfolie gegossen, die anschließend auf eine Gesamtdicke von 80 µm geschliffen wurde.

Nachfolgend wurde die geschliffene Grünfolie auf porösen Al₂O₃-Platten bei einer Temperatur von 1400 °C über einen Zeitraum von drei Stunden gesintert.

Die gesinterten Folien sollten eine Dicke von ca. 50 µm aufweisen, um die gewünschten federelastischen Eigenschaften sowie eine ausreichend hohe elektrische Leitfähigkeit zu gewährleisten.

Neben der Wandstärke der gesinterten Kontaktelemente kann die Vorspannung auch durch die geometrische Gestaltung der entsprechend erfindungsgemäß einzusetzenden Kontaktelemente 6 beeinflusst werden.

Die geometrische Gestalt, also die beispielsweise in Figur 1 gezeigte Wellenform, kann bereits beim Sintern durch entsprechende Gestaltung der Al₂O₃-Platten ausgebildet werden.

Es besteht aber auch die Möglichkeit, die Formgebung durch spanende Bearbeitung (Schleifen) auszubilden.

Für den Fall, dass Durchströmungsöffnungen an Kontaktelementen vorhanden sein sollen, können diese sehr einfach vor, wie auch z.B. mittels Laserschneiden nach dem Sintern ausgebildet werden.

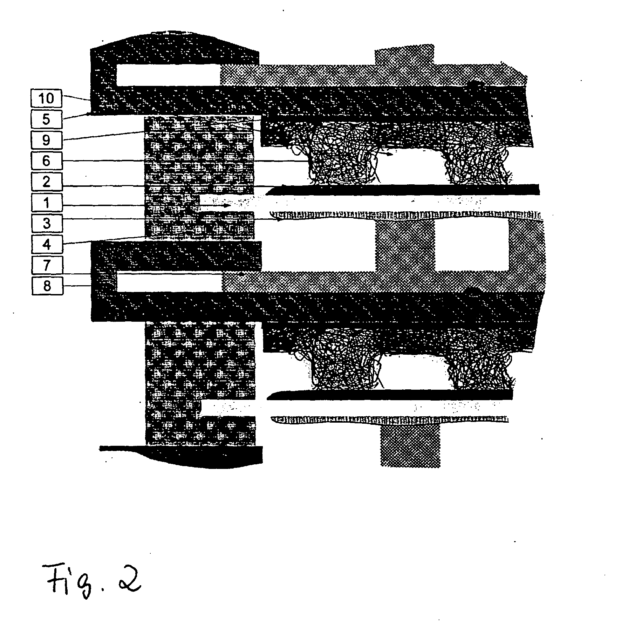

In Figur 2 ist ein weiteres Beispiel einer erfindungsgemäßen stapelbaren Hochtemperaturbrennstoffzelle gezeigt. Dabei wurden gleiche Elemente wiederum mit gleichen Bezugszeichen, wie beim Beispiel nach Figur 1 versehen.

Bei diesem Beispiel wurden im Gegensatz zu dem Beispiel nach Figur 1 jedoch Kontaktelemente 6 eingesetzt, die aus strukturierten Faservliesen, wie im allgemeinen Teil der Beschreibung erklärt, hergestellt worden sind.

Dabei wurden Fasern einer uLSM-Keramik mit einem Durchmesser von 30 µm mit einer Bulkdichte von 6,5 g/cm³ eingesetzt und in grüner Form durch eine Verpressung verformt, so dass sich die in Figur 2 deutlich erkennbare Oberflächenstruktur ergab. So kann eine elastische und formschlüssige Kontaktierung zu den jeweiligen Interkonnektoren 5 erreicht werden.

Die weniger verdichteten Bereiche des Faservlieses, des Kontaktelementes 6 bilden stegförmige Erhebungen und stehen in berührendem Kontakt mit der Kathode 2 und diese weniger verdichteten Bereiche weisen eine Elastizität von 5 % und eine Dichte von 2 g/cm³ auf und erreichen eine Porosität von ca. 70 %.

Die stärker verdichteten Bereiche weisen bei dem hier gezeigten Beispiel eine Dichte von 5 g/cm³ auf.

Wird der elastische Bereich der Fasern überschritten, kommt es zum Megbrechen von einzelnen Fasern und zur Ausbildung von neuen Kontaktstellen. Beim Fügen von Stacks können dadurch größere Toleranzen untereinander ausgeglichen werden.

Auf der anderen Seite, also zwischen Anode 3 und Interkonnektor 5 ist ein strukturierter Nickelschaum 7 für eine Kontaktierung vorgesehen.

## Patentansprüche

1. Stapelbare Hochtemperaturbrennstoffzelle mit einer Elektrodeneinheit (1, 2, 3), die anodenseitig an eine Brennstoffzuführung und kathodenseitig an eine Oxidationsmittelzuführung angeschlossen ist und die Kathode (2) mittels mindestens eines federelastischen Kontaktelementes (6) mit einem Interkonnektor (5) elektrisch leitend verbunden ist, wobei ein oder mehrere eine Druckkraft auf Bereiche der Kathode (2) und Bereiche des Interkonnektors (5) ausübende(s) federelastische(s) Kontaktelement(e) (6) aus einem elektrisch leitenden Keramikwerkstoff gebildet ist/sind
**dadurch gekennzeichnet, dass**
das/die Kontaktelement(e) als ein gesintertes Faservlies einer elektrisch leitenden Keramik ausgebildet ist/sind, wobei das Faservlies stärker verdichtete Bereiche mit dichter beieinander liegenden Fasern und nicht verdichtete oder weniger stark als die stärker verdichteten Bereiche verdichtete Bereiche, welche eine Oberflächenstruktur mit Erhebungen oder Stegen ausbilden, aufweist.

2. Brennstoffzelle nach Anspruch 1,
**dadurch gekennzeichnet, dass** die stärker verdichteten Bereiche Dichten im Bereich zwischen 3 und 6,5 g/cm³ aufweisen und dass die nicht verdichteten oder weniger stark verdichteten Bereiche eine Dichte im Bereich zwischen 1 und 4 g/cm³ aufweisen.

3. Brennstoffzelle nach Anspruch 1 oder 2, **dadurch gekennzeichnet, dass** der Keramikwerkstoff aus der Gruppe der Perowskit- oder einer Keramik mit der Grundzusammensetzungsform AB₂O₃, A₂BO₄ oder A₂B₂O₇ ausgewählt ist.

4. Brennstoffzelle nach einem der vorhergehenden Ansprüche,
**dadurch gekennzeichnet, dass** einzelne Kontaktelement(e) (6), als Folie mit einer Wandstärke im Bereich 20 bis 150 µm ausgebildet ist/sind.

5. Brennstoffzelle nach einem der vorhergehenden Ansprüche, **dadurch gekennzeichnet, dass** Interkonnektor (5) und Kathode (2) mittels eines äußeren Randelementes (4) mechanisch so miteinander verbunden sind, dass das/die Kontaktelement(e) (6) vorgespannt ist/sind.

6. Brennstoffzelle nach einem der vorhergehenden Ansprüche, **dadurch gekennzeichnet, dass** einzelne Kontaktelement(e) (6) in Wellen-, Keil- oder Trapezform ausgebildet ist/sind.

7. Brennstoffzelle nach einem der vorhergehenden Ansprüche, **dadurch gekennzeichnet, dass** ein Kontaktelement (6) mit punktförmigen diskret zueinander angeordneten Erhebungen und Vertiefungen ausgebildet ist.

8. Brennstoffzelle nach einem der vorhergehenden Ansprüche, **dadurch gekennzeichnet, dass** einzelne Kontaktelemente (6) als offene oder geschlossene röhrenförmige Elemente ausgebildet sind.

9. Brennstoffzelle nach einem der vorhergehenden Ansprüche, **dadurch gekennzeichnet, dass** einzelne Kontaktelemente, in Streifenform mit Wellen, auf die am Interkonnektor ausgebildeten Stege angeordnet sind.

10. Brennstoffzelle nach einem der vorhergehenden Ansprüche, **dadurch gekennzeichnet, dass** einzelne Kontaktelemente einseitig offene teilkreis-, trapez- oder keilförmige Elemente sind.

11. Brennstoffzelle nach einem der vorhergehenden Ansprüche, **dadurch gekennzeichnet, dass** Kontaktelemente (6) flächig- oder linienförmig auf Oxidationsmittelkanäle voneinander trennenden am Interkonnektor (5) ausgebildeten Stegen mit Druckkraftbeaufschlagung aufliegen.

12. Brennstoffzelle nach einem der vorhergehenden Ansprüche, **dadurch gekennzeichnet, dass** das/die Kontaktelement(e) (6) durch das Randelement (4) fixiert sind.

13. Brennstoffzelle nach einem der vorhergehenden Ansprüche, **dadurch gekennzeichnet, dass** an/am Kontaktelement(en) (6) Durchströmungsöffnungen ausgebildet sind.

14. Brennstoffzelle nach einem der vorhergehenden Ansprüche, **dadurch gekennzeichnet, dass** das/die Kontaktelement(e) (6) eine für eine Oxidationsmittelpermeabilität ausreichende Porosität aufweist.

15. Brennstoffzelle nach einem der vorhergehenden Ansprüche, **dadurch gekennzeichnet, dass** die kathodenseitige Oberfläche des Interkonnektors (5) als ebene Fläche ausgebildet ist und die Ausbildung der Gasräume durch das/die Kontaktelement(e) (6) erfolgt.

16. Brennstoffzelle nach einem der vorhergehenden Ansprüche, **dadurch gekennzeichnet, dass** an Bereichen punkt- oder linienförmiger Berührung von Kontaktelement(en) (6) mit der Kathode (2) und/oder dem Interkonnektor (5) eine Kontaktschicht (9) ausgebildet ist.

17. Brennstoffzelle nach einem der vorhergehenden Ansprüche, **dadurch gekennzeichnet, dass** das Rahmenelement (4) aus einer Glaskeramik gebildet ist.

18. Brennstoffzelle nach einem der vorhergehenden Ansprüche, **dadurch gekennzeichnet, dass** zwischen der Anode (3) und dem anodenseitigen Interkonnektor (8) mindestens ein federelastisches, keramisches Kontaktelement (6) angeordnet ist.

## Claims

1. A stackable high temperature fuel cell having an electrode unit (1, 2, 3), which is connected to a fuel supply on the anode side and to an oxidant supply on the cathode side and the cathode (2) is connected in an electrically conductive manner to an interconnector (5) by means of at least one flexible contact element (6), with one or more flexible contact elements (6), which exert a compressive force on regions of the cathode (2) and regions of the interconnector (5), being made from an electrically conductive ceramic material,
**characterised in that**
the contact element or elements is or are in the form of a sintered non-woven fabric of an electrically conductive ceramic, with the non-woven fabric having more densified regions with fibres more tightly packed together and having non-densified regions or regions which are less densified than the more densified regions and which form a surface structure with raised areas or fillets.

2. A fuel cell according to claim 1,
**characterised in that** the more densified regions have densities in the range between 3 and 6.5 g/cm³ and **in that** the non-densified or less densified regions have a density in the range between 1 and 4 g/cm³.

3. A fuel cell according to claim 1 or 2,
**characterised in that** the ceramic material is selected from the group comprising perovskite ceramics or a ceramic having the basic composition form AB₂O₃, A₂BO₄ or A₂B₂O₇.

4. A fuel cell according to one of the preceding claims,
**characterised in that** some contact elements (6) are in the form of a film having a wall thickness in the range 20 to 150 µm.

5. A fuel cell according to one of the preceding claims, **characterised in that** the interconnector (5) and cathode (2) are mechanically interconnected by means of an outer frame element (4) such that the contact element or elements (6) is or are pre-tensioned.

6. A fuel cell according to one of the preceding claims, **characterised in that** some contact elements (6) are in an undulatory, wedge-shaped or trapezoidal form.

7. A fuel cell according to one of the preceding claims, **characterised in that** a contact element (6) is designed with punctiform raised areas and depressions arranged discretely relative to each other.

8. A fuel cell according to one of the preceding claims, **characterised in that** some contact elements (6) are in the form of open or closed tubular elements.

9. A fuel cell according to one of the preceding claims, **characterised in that** some contact elements, in strip form with undulations, are arranged on the fillets formed on the interconnector.

10. A fuel cell according to one of the preceding claims, **characterised in that** some contact elements are elements open on one side and in the shape of a circle sector, trapezium or wedge.

11. A fuel cell according to one of the preceding claims, **characterised in that** contact elements (6) rest, with the action of compressive force, extensively or in lines on fillets which are formed on the interconnector (5) and which mutually separate oxidant channels.

12. A fuel cell according to one of the preceding claims, **characterised in that** the contact element or elements (6) is or are secured by the frame element (4).

13. A fuel cell according to one of the preceding claims, **characterised in that** flow-through openings are formed on contact elements or on the contact element (6).

14. A fuel cell according to one of the preceding claims, **characterised in that** the contact element or elements (6) has or have a porosity adequate for oxidant permeability.

15. A fuel cell according to one of the preceding claims, **characterised in that** the cathode-side surface of the interconnector (5) is in the form of a plane face and the gas compartments are formed by the contact element or elements (6).

16. A fuel cell according to one of the preceding claims, **characterised in that** a contact layer (9) is formed on regions of punctiform or linear contact between a contact element or contact elements (6) and the cathode (2) and/or the interconnector (5).

17. A fuel cell according to one of the preceding claims, **characterised in that** the frame element (4) is made from a glass ceramic.

18. A fuel cell according to one of the preceding claims, **characterised in that** at least one flexible ceramic contact element (6) is arranged between the anode (3) and the anode-side interconnector (8).

## Revendications

1. Cellule de combustible à haute température empilable, comprenant une unité d'électrodes (1, 2, 3), qui est connectée côté anode à une source de combustible et côté cathode à une source d'agent d'oxydation, tandis que la cathode (2) est connectée, de manière à conduire l'électricité, à une interconnexion (5) au moyen d'au moins un élément de contact élastique (6), dans laquelle un ou plusieurs élément(s) de contact élastique(s) (6) exerçant une pression sur des zones de la cathode (2) et des zones de l'interconnexion (5) est ou sont formé(s) d'un matériau céramique conducteur de l'électricité, **caractérisée en ce que** le ou les éléments de contact se présente(nt) sous la forme d'un non-tissé fritté d'une céramique conductrice de l'électricité, le non-tissé présentant des zones plus fortement densifiées avec des fibres plus densément rapprochées et des zones non densifiées ou moins fortement densifiées que les zones fortement densifiées, lesquelles zones forment une structure superficielle avec des élévations ou des nervures.

2. Cellule de combustible selon la revendication 1, **caractérisée en ce que** les zones plus fortement densifiées ont des masses volumiques dans la plage entre 3 et 6,5 g/cm³ et **en ce que** les zones non densifiées ou moins fortement densifiées ont une masse volumique dans la plage entre 1 et 4 g/cm³.

3. Cellule de combustible selon la revendication 1 ou 2, **caractérisée en ce que** le matériau céramique est choisi dans le groupe de la pérowskite ou d'une céramique de composition de base AB₂O₃, A₂BO₄ ou A₂B₂O₇.

4. Cellule de combustible selon l'une quelconque des revendications précédentes, **caractérisée en ce que** le ou les éléments de contact individuels (6) se présente(nt) sous la forme d'une feuille d'une épaisseur de paroi dans la plage de 20 à 150 µm.

5. Cellule de combustible selon l'une quelconque des revendications précédentes, **caractérisée en ce que** l'interconnexion (5) et la cathode (2) sont connectées l'une à l'autre mécaniquement au moyen d'un élément marginal extérieur (4) de sorte que le ou les éléments de contact (6) soi(en)t polarisé(s).

6. Cellule de combustible selon l'une quelconque des revendications précédentes, **caractérisée en ce que** le ou les éléments de contact individuels (6) se présente(nt) sous une forme ondulée, cunéiforme ou trapézoïdale.

7. Cellule de combustible selon l'une quelconque des revendications précédentes, **caractérisée en ce qu'**un élément de contact (6) est formé avec des élévations et des renfoncements ponctuels agencés séparément l'un de l'autre.

8. Cellule de combustible selon l'une quelconque des revendications précédentes, **caractérisée en ce que** des éléments de contact individuels (6) se présentent sous la forme d'éléments tubulaires ouverts ou fermés.

9. Cellule de combustible selon l'une quelconque des revendications précédentes, **caractérisée en ce que** des éléments de contact individuels, sous la forme de bandes dotées d'ondulations, sont agencés sur les nervures formées sur l'interconnexion.

10. Cellule de combustible selon l'une quelconque des revendications précédentes, **caractérisée en ce que** des éléments de contact individuels sont des éléments en forme de cercle partiel, de trapèze ou cunéiforme, ouvert d'un côté.

11. Cellule de combustible selon l'une quelconque des revendications précédentes, **caractérisée en ce que** des éléments de contact individuels (6) s'appliquent, sous l'effet d'une pression, à plat où en forme de ligne, sur des nervures formées sur l'interconnexion séparant des canaux d'agent d'oxydation l'un de l'autre.

12. Cellule de combustible selon l'une quelconque des revendications précédentes, **caractérisée en ce que** le ou les élément(s) de contact (6) est ou sont fixé(s) par l'élément marginal (4).

13. Cellule de combustible selon l'une quelconque des revendications précédentes, **caractérisée en ce que** des ouvertures de passage sont formées sur le ou les éléments de contact (6).

14. Cellule de combustible selon l'une quelconque des revendications précédentes, **caractérisée en ce que** le ou les éléments de contact (6) présente(nt) une porosité suffisante pour une perméabilité de l'agent d'oxydation.

15. Cellule de combustible selon l'une quelconque des revendications précédentes, **caractérisée en ce que** la surface côté cathode de l'interconnexion (5) se présente sous la forme d'une surface plate et la formation des espaces de gaz se fait via le ou les éléments de contact (6).

16. Cellule de combustible selon l'une quelconque des revendications précédentes, **caractérisée en ce qu'**il se forme une couche de contact (9) dans les zones de contact ponctuel ou linéaire d'élément(s) de contact (6) avec la cathode (2) et/ou l'interconnexion (5).

17. Cellule de combustible selon l'une quelconque des revendications précédentes, **caractérisée en ce que** l'élément de cadre (4) est formé d'une vitrocéramique.

18. Cellule de combustible selon l'une quelconque des revendications précédentes, **caractérisée en ce qu'**au moins un élément de contact céramique élastique (6) est aménagé entre l'anode (3) et l'interconnexion côté anode (8).
